# EUROPÄISCHE PATENTSCHRIFT

(11) **EP 1 561 048 B1**
(45) Veröffentlichungstag und Bekanntmachung des Hinweises auf die Patenterteilung: **11.02.2009**
(21) Anmeldenummer: 03779531.7
(22) Anmeldetag: 12.11.2003
(51) Int. Cl.: F16F 15/26

(54) **AUSGLEICHSWELLE FÜR HUBKOLBENMASCHINEN**
BALANCE SHAFT FOR A RECIPROCATING PISTON ENGINE
ARBRE DE COMPENSATION POUR MOTEURS A PISTON ALTERNATIF

(30) Priorität: 12.11.2002 AT 7642002
(43) Veröffentlichungstag der Anmeldung: 10.08.2005
(73) Patentinhaber: Magna Drivetrain AG & Co KG, 8502 Lannach (AT)
(72) Erfinder: FRIEDRICH, Christian, A-8010 Graz (AT)
(74) Vertreter: Manitz, Finsterwald & Partner GbR
(86) Internationale Anmeldenummer: PCT/AT2003/000340
(87) Internationale Veröffentlichungsnummer: WO 2004/044452

(56) Entgegenhaltungen:
- EP-A- 1 136 721
- GB-A- 1 250 729
- PATENT ABSTRACTS OF JAPAN Bd. 2000, Nr. 13, 5. Februar 2001 (2001-02-05) & JP 2000 283238 A (SUZUKI MOTOR CORP), 13. Oktober 2000 (2000-10-13)
- PATENT ABSTRACTS OF JAPAN Bd. 1996, Nr. 09, 30. September 1996 (1996-09-30) & JP 8 135740 A (MITSUBISHI MOTORS CORP), 31. Mai 1996 (1996-05-31)

## Beschreibung

Die Erfindung betrifft eine Ausgleichswelle für Hubkolbenmaschinen mit mindestens einem Ausgleichsgewicht mit exzentrischem Schwerpunkt, wobei das Ausgleichsgewicht drehelastisch mit der Ausgleichswelle verbunden ist. Bei modernen Verbrennungskraftmaschinen werden zur Verminderung von Schwingungen und Laufgeräuschen Ausgleichswellen verwendet. Deren Wirkung und Erfolg ist aber nur dann zufriedenstellend, wenn die Ausgleichswelleneinheit selbst auch ruhig und schwingungsfrei läuft.

Schwingungen der Ausgleichswelleneinheit können angeregt werden durch die bewegten Massen des Motors und durch dessen Drehungleichförmigkeit. Letztere sind wegen der Spiele in deren Antrieb und dem kleinen über diesen übertragenen Drehmoment eine besonders schwer beherrschbare Geräuschquelle, ausserdem wird durch die Drehungleichförmigkeit auf die Zähne eine grosse Belastung mit wechselndem Vorzeichen ausgeübt. Eine Minimierung der Zahnspiele ist wegen der auftretenden Temperaturdifferenzen problematisch und verteuert die Fertigung ausserordentlich.

Es ist bekannt, das Antriebszahnrad auf der Kurbelwelle des Motors mit einer elastischen Verbindung zwischen Zahnkranz und Radkörper zu versehen, etwa aus der US 3,667,317, doch lässt diese Entkoppelung von der Erregung durch die Kurbelwelle den Massen der ganzen Ausgleichswelleneinheit die Freiheit zu schwingen.

Weiters ist es aus der JP 2000-283238 AA bekannt, zwischen einem Ausgleichsgewicht und einer als Hohlwelle ausgeführten Büchse eine drehelastische Verbindung herzustellen. Diese besteht aus Gummi, der zwischen Klauen im Inneren des Ausgleichsgewichtes und äusseren Klauen der Büchse eingepasst ist.

Es ist daher Aufgabe der Erfindung, bei geringsten Herstellungskosten (einfache Montage inbegriffen) durch drehelastische Verbindung mit der Ausgleichswelle bei einer Ausgleichswelleneinheit eine wirksame Geräuschreduktion zu erzielen. Erfindungsgemäß wird das dadurch erreicht, dass das Ausgleichsgewicht die Ausgleichswelle mit ihren Randzonen (wie in der WO 01/29447 A1 beschrieben) umgibt und in Längsrichtung dazwischen ein Fenster gebildet ist, in dem ein elastisches Element vorgesehen ist, das sich in Umfangsrichtung auf der Ausgleichswelle abstützt. So ist die Verbindung in Umfangsrichtung weich und in radialer Richtung hart, was wegen der Unwucht erwünscht ist. Ausserdem lässt das Fenster nebst den sonstigen Vorteilen genug Raum für eine Feder-Dämpfereinheit, oder für ein elastisches Element aus Kunststoff. Letzteres macht es möglich, ein Ausgleichsgewicht mit geschlossener zylindrischer Kontur auszuführen, was dessen Planschverluste minimiert. Dadurch, dass nur mehr die Ausgleichsmassen selbst frei schwingen, Verringerung der Zahneintrittsstöße an den Antriebszahnrädern und ruhigerer Lauf

In einer besonders guten Weiterbildung besteht das elastische Element aus einem Kunststoff von in Umfangsrichtung abgestufter Elastizität, wobei der harte Mittelteil eine in Umfangsrichtung feste Verbindung mit der Ausgleichswelle aufweist. Damit wird zunächst eine progressive Federkennung erreicht, was zum einen freies Ausschwingen erlaubt, zum anderen aber doch den Ausschlag begrenzt.

In einer vorteilhaften Ausführungsform ist der Kunststoffteil durch Spritzen hergestellt, wobei die Verbindung mit der Ausgleichswelle aus einer in eine Querbohrung der Welle ragenden mitgespritzten Wurzel besteht. Das ermöglicht einfache Herstellung und schnelle Montage des Kunststoffteiles im Ausgleichsgewicht. Dazu kann die Wurzel eine me-tallische Verstärkung enthalten.

Im Folgenden wird die Erfindung anhand von Abbildungen beschrieben und erläutert. Es stellen dar:
Fig. 1: eine erste Ausführungsform in axonometrischer Ansicht,
Fig. 2: eine zweite Ausführungsform in axonometrischer Ansicht,
Fig. 3: eine dritte Ausführungsform in axonometrischer Ansicht,
Fig. 4: einen Schnitt nach AA in Fig. 3.

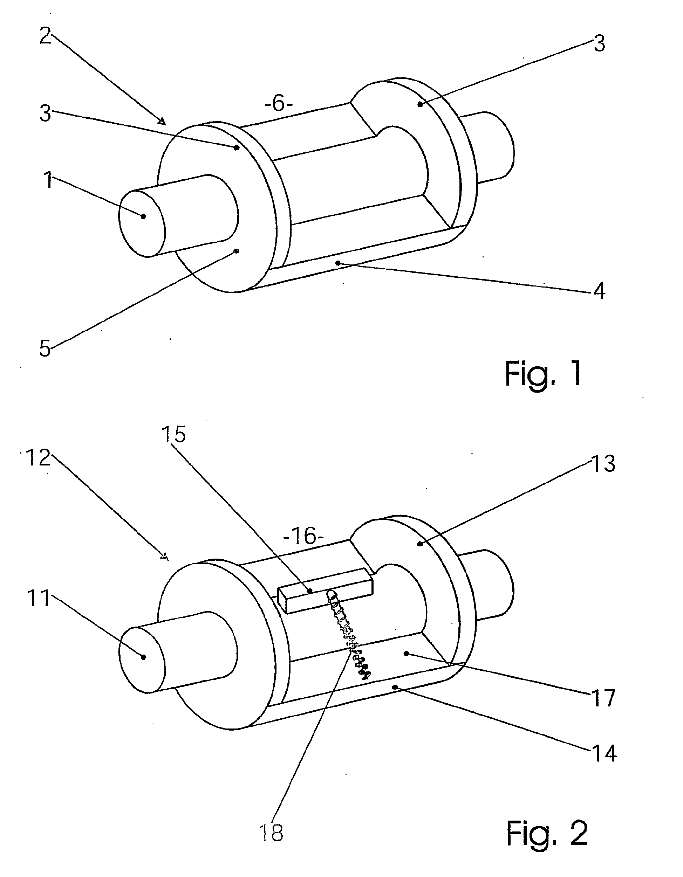

In **Fig. 1** ist eine Welle mit 1 und ein Ausgleichsgewicht mit 2 bezeichnet. Beide gemeinsam bilden eine Ausgleichswelle, welche auch mehr als ein Ausgleichsgewicht 2 haben kann. Das Ausgleichsgewicht 2 ist hier von der aus der WO 01/29447 bekannten Bauart mit zwei Randzonen 3, die die Welle 1 hosenträgerartig umgeben und einer exzentrischen Unwuchtmasse 4. So entsteht auf der der Unwuchtmasse 4 abgewandten Seite der Welle 1 ein Fenster 6. Das Ausgleichsgewicht könnte aber auch von anderer Form sein. Wesentlich ist, dass das Ausgleichsgewicht 2 unter Zwischenschaltung einer elastischen Buchse 5 auf der Welle 1 befestigt ist. Die elastische Buchse 5 hat hier die Form eines Zylindermantels, der in dem Fenster 6 ausgeschnitten ist. Sie besteht aus einem vor allem in Umfangsrichtung elastischen Material, vorzugsweise einem gummiartigen Kunststoff. Die Verbindung zwischen der elastischen Buchse 5 und den an ihr anliegenden Flächenteilen von Welle 1 und Ausgleichsgewicht 2 kann in der üblichen Weise durch kleben oder vulkanisieren erfolgen.

In **Fig. 2** sind analoge Teile mit einem um zehn erhöhten Bezugszeichen versehen. Das Ausgleichsgewicht 12 mit seinen Randzonen 13 und seiner exzentrischen Unwuchtmasse 14 hat hier wieder ein Fenster 16, das von den Innenflächen der Randzonen 13 und den Begrenzungsflächen der exzentrischen Unwuchtmasse 14 gebildet ist. In diesem Fenster erkennt man einen passfederförmigen Anschlag 15, der Teil der Welle 11 oder fest mit ihr verbunden ist. Zwischen diesem und der Begrenzungsfläche 17 ist eine nur schematisch dargestellte Feder-Dämpfer-Einheit 18 angeordnet, welche der Relativdrehung zwischen dem Ausgleichsgewicht 12 und der Welle 11 in einer Richtung entgegenwirkt, eine weitere solche Feder-Dämpfer-Einheit, die in der anderen Drehrichtung wirkt, ist auch vorhanden, aber nicht sichtbar.

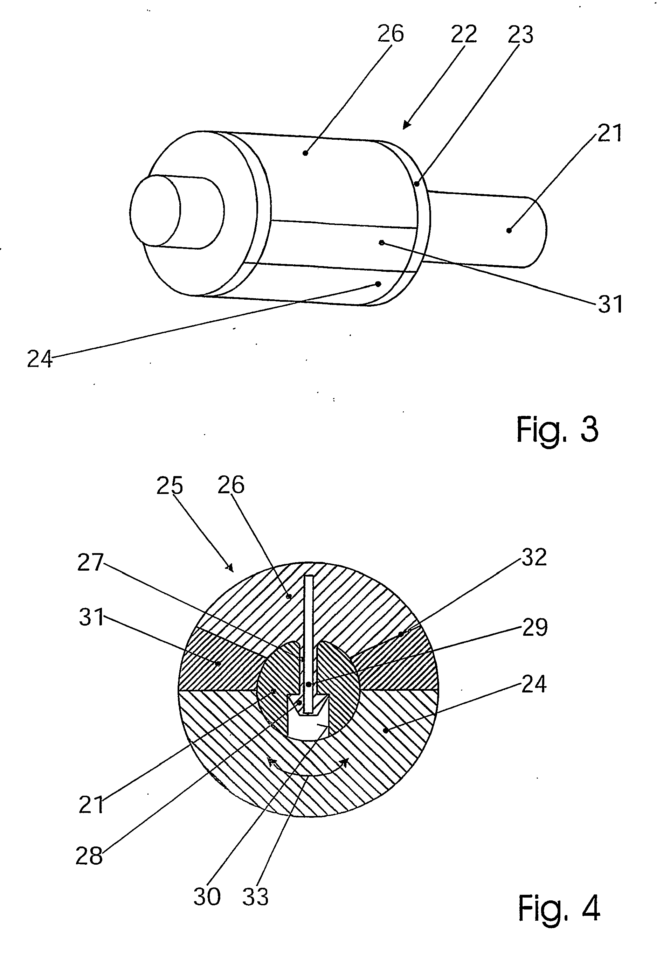

In **Fig. 3** und **Fig. 4****,** die Bezugszeichen sind um zwanzig erhöht, ist das in Fig. 2 mit 16 bezeichnete Fenster mit einem elastischen Element 25 ausgefüllt. Dieses ist aus einem leichten Stoff, vorzugsweise einem Kunststoff und besteht aus einem sich über die ganze achsiale Länge des Ausgleichsgewichtes 22 erstreckenden harten Teil 26 und beiderseits davon weichen Teilen 31. Harte und weiche Teile können gemeinsam einstückig gespritzt sein. Zur Befestigung des elastischen Elementes 25 auf der Welle 21 hat diese eine abgestufte Querbohrung 30. Der harte Mittelteil 26 des elastischen Elementes 25 hat eine radial einwärts ragende Wurzel 27, die in einer hakenförmigen Erweiterung 28 endet. Diese Wurzel 27 wird beim Zusammenbau der Ausgleichswelle in die Querbohrung 30 eingeführt, bis ihr Haken in der Erweiterung der Querbohrung einschnappt und sodann mittels einer metallischen Verstärkung 29 fixiert. Der weiche Teil 31 des elastischen Elementes 25 kann mit der Begrenzungsfläche 32 der Unwuchtmasse verbunden sein. Das elastische Element 25 füllt das Fenster ganz aus, sodass das Ausgleichsgewicht eine zylindrische Außenkontur hat. Der beidseitige Richtungspfeil 33 in Fig. 4 zeigt noch an, dass der exzentrische Unwuchtteil 24 mit den Randzonen 23 sich aus der bezeichneten Stellung bezüglich der Welle 1 in beiden Richtungen verdrehen kann.

Der dämpfende elastische Teil, egal ob eine Federdämpfereinheit 18 oder ein elastisches Element 25, ist so aufgebaut, dass er ein Verdrehen der Unwuchtmasse um bis zu zehn Winkelgrade in beiden Richtungen gegenüber seiner gezeichneten Position zulässt. Ist dieser Maximalausschlag erreicht, so tritt bei dem elastischen Element 25 der harte Teil 26 in Wirkung und verhindert eine weitere Verdrehung. Derartig starke Verdrehungen finden aber nur während abrupter Drehzahländerungen statt, wogegen die sehr schnellen kleinen Drehzahländerungen durch die Drehungleichförmigkeit des Motors vollkommen aufgefangen werden, das Ausgleichsgewicht dreht sich mit ganz konstanter Drehzahl.

Bemerkenswert ist, dass auch eine Verdrehung des Ausgleichsgewichtes um den vollen Ausschlag von zehn Winkelgraden nur eine kurzzeitige Reduktion der Ausgleichswirkung um nicht mehr als 1½ % bedeutet.

Insgesamt können dank der erfmdungsgemäßen Anordnung die Toleranzen sowohl der Verzahnung der Antriebszahnräder als auch anderer Teile vergrößert werden und ist die Belastung der die Ausgleichswelle antreibenden Zahn- oder Kettenräder wesentlich reduziert. Trotzdem wird eine merkliche Erhöhung der Laufruhe erreicht.

## Patentansprüche

1. Ausgleichswelle für Hubkolbenmaschinen mit mindestens einem Ausgleichsgewicht mit exzentrischem Schwerpunkt, wobei das Ausgleichsgewicht (2; 12; 22) drehelastisch mit der Ausgleichswelle (1; 11; 21) verbunden ist, **dadurch gekennzeichnet, dass** das Ausgleichsgewicht (2; 12; 22) die Ausgleichswelle (1; 11; 21) mit ihren Randzonen (3; 13; 23) umgibt und in Längsrichtung dazwischen ein Fenster (6; 16) gebildet ist, in dem ein elastisches Element (18; 25) vorgesehen ist, das sich in Umfangsrichtung auf der Ausgleichswelle (11; 21) abstützt.

2. Ausgleichswelle nach Anspruch 1, **dadurch gekennzeichnet, dass** das elastische Element eine Feder-Dämpfereinheit (18) ist.

3. Ausgleichswelle nach Anspruch 1, **dadurch gekennzeichnet, dass** das elastische Element (25) aus Kunststoff besteht.

4. Ausgleichswelle nach Anspruch 3, **dadurch gekennzeichnet, dass** das elastische Element (25) aus Kunststoff von in Umfangsrichtung abgestufter Elastizität besteht, wobei der harte Mittelteil (26) eine in Umfangsrichtung feste Verbindung (15) mit der Ausgleichswelle (11) aufweist und der weiche Teil (31) am Ausgleichsgewicht (22) anliegt.

5. Ausgleichswelle nach Anspruch 4, **dadurch gekennzeichnet, dass** der Kunststoffteil durch Spritzen hergestellt ist, wobei die Verbindung mit der Ausgleichswelle (21) aus einer in eine Querbohrung (30) der Welle (21) ragenden mitgespritzten Wurzel (27) besteht.

6. Ausgleichswelle nach Anspruch 5, **dadurch gekennzeichnet, dass** die Wurzel (27) eine metallische Verstärkung (29) enthält.

## Claims

1. A balance shaft for reciprocating piston engines with at least one balance weight with an eccentric center of gravity, wherein the balance weight (2; 12; 22) is connected in a torsionally elastic manner to the balance shaft (1; 11; 21), **characterized in that** the edge zones of the balance weight (2; 12; 22) surrounds the balance shaft (1; 11; 21) and a window (6; 16) is formed therebetween in the longitudinal direction in which an elastic element (18; 25) is provided which is supported on the balance shaft (11; 21) in the circumferential direction.

2. A balance shaft in accordance with claim 1, **characterized in that** the elastic element is a spring damper unit (18).

3. A balance shaft in accordance with claim 1, **characterized in that** the elastic element (25) is made of plastic.

4. A balance shaft in accordance with claim 3, **characterized in that** the elastic element (25) is made of plastic of an elasticity which is graduated in the circumferential direction, with the hard central part (26) having a connection to the balance shaft (11) which is firm in the circumferential direction and with the soft part (31) contacting the balance weight (22).

5. A balance shaft in accordance with claim 4, **characterized in that** the plastic part is manufactured by injection molding, with the connection to the balance shaft (21) comprising a co-injected root (27) projecting into a transverse bore (30) of the shaft (21).

6. A balance shaft in accordance with claim 5, **characterized in that** the root (27) comprises a metal reinforcement (29).

## Revendications

1. Arbre de compensation pour moteurs à pistons alternatifs, comprenant au moins un poids de compensation avec un centre de gravité excentré, le poids de compensation (2 ; 12 ; 22) étant relié à l'arbre de compensation (1 ; 11 ; 21) avec élasticité en rotation, **caractérisé en ce que** le poids de compensation (2 ; 12 ; 22) entoure l'arbre de compensation (1 ; 11 ; 21) par ses zones de bordure (3 ; 13 ; 23), et en direction longitudinale entre ces dernières est formée une fenêtre (6 ; 16) dans laquelle est prévu un élément élastique (18 ; 25) qui s'appuie en direction périphérique sur l'arbre de compensation (11 ; 21).

2. Arbre de compensation selon la revendication 1, **caractérisé en ce que** l'élément élastique est une unité d'amortissement à ressort (18).

3. Arbre de compensation selon la revendication 1, **caractérisé en ce que** l'élément élastique (25) est en matière plastique.

4. Arbre de compensation selon la revendication 3, **caractérisé en ce que** l'élément élastique (25) est en une matière plastique dont l'élasticité présente des gradins en direction périphérique, la partie médiane dure (26) présentant une liaison (15) ferme en direction périphérique avec l'arbre de compensation (11), et la partie souple (31) étant appliquée contre le poids de compensation (22).

5. Arbre de compensation selon la revendication 4, **caractérisé en ce que** la pièce en matière plastique est réalisée par injection, la liaison avec l'arbre de compensation (21) étant formée par un talon (27) réalisé conjointement par injection et pénétrant dans un perçage transversal (30) de l'arbre (21).

6. Arbre de compensation selon la revendication 5, **caractérisé en ce que** le talon (27) contient un renforcement métallique (27).
